(19) Europäisches Patentamt
European Patent Office
Office européen des brevets

(11) Veröffentlichungsnummer: **0 228 994 B1**

(12) # EUROPÄISCHE PATENTSCHRIFT

(45) Veröffentlichungstag der Patentschrift: **08.02.89**

(51) Int. Cl.⁴: **C07C 147/02,** C08K 5/41

(21) Anmeldenummer: **86810582.6**

(22) Anmeldetag: **10.12.86**

(54) **Substituierte Aminoxyethylsulfoxide und -sulfone.**

(30) Priorität: **16.12.85 US 809637**

(43) Veröffentlichungstag der Anmeldung:
**15.07.87 Patentblatt 87/29**

(45) Bekanntmachung des Hinweises auf die Patenterteilung:
**08.02.89 Patentblatt 89/6**

(84) Benannte Vertragsstaaten:
**BE CH DE FR GB IT LI NL SE**

(56) Entgegenhaltungen:
**US-A- 3 316 299**
**US-A- 3 455 916**
**US-A- 3 644 278**

(73) Patentinhaber: **CIBA-GEIGY AG, Klybeckstrasse 141, CH-4002 Basel(CH)**

(72) Erfinder: **Ravichandran, Ramanathan, 111 De Haven Drive Apt. 125, Yonkers, N.Y. 10703(US)**

EP 0 228 994 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft neue Aminoxyethylsulfoxide und -sulfone, deren Verwendung zum Stabilisieren von organischem Material und das mit deren Hilfe gegen oxidativen, thermischen und/oder aktinischen Abbau stabilisierte organische Material.

Organische Materialien, wie z.B. Kunststoffe und Harze unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlangt werden, dass er übermässige Vernetzungsreaktionen und/oder Kettenabbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Verschiedene organische Hydroxylamine sind bekannt und einige sind im Handel erhältlich. Eine Anzahl von Patenten offenbaren substituierte Hydroxylamine als Antioxidantien für verschiedene Substrate, einschliesslich Polyolefine, Polyester und Polyurethane. Als repräsentative Patente seien die US-Patente 3 432 578, 3 644 278, 3 778 464, 3 408 422, 3 926 909, 4 316 996 und 4 386 224 genannt, welche im wesentlichen N,N-Dialkyl-, N,N-Diaryl- und N,N-Diaralkylhydroxylamine und deren Wirksamkeit als Farbverbesserer beschreiben.

US-Patent 3 316 299 beschreibt die Herstellung von bestimmten Bis[aminoxyethyl]sulfonen und deren Verwendung als Arzneimittel.

Es wurde nun gefunden, dass die Aminoxyethylsulfoxide und -sulfone dieser Erfindung eine Vielzahl der gewünschten Eigenschaften besitzen, wodurch diese Verbindungen zu besonders effektiven Stabilisatoren werden. So schützen sie eine Reihe von Substraten, wie z.B. Polyolefine, Elastomere und Schmiermittel gegen oxidativen und thermischen Abbau. Ferner sind sie sehr wirkungsvolle Farbverbesserer und Verarbeitungsstabilisatoren für Polyolefinzusammensetzungen, die Metallsalze von Fettsäuren und phenolische Antioxidantien enthalten können. Hauptsächlich können die erfindungsgemässen Aminoxyethylsulfoxide und -sulfone dazu dienen, Verfärbungen zu vermindern, die auf die Gegenwart von phenolischen Antioxidantien und/oder auf die Verarbeitungsbedingungen zurückzuführen sind. Ferner schützen die erfindungsgemässen Verbindungen das organische Polymer direkt vor den Auswirkungen der Verarbeitungsbedingungen. Sie schützen auch solche Polyolefinzusammensetzungen, die gehinderte Amin-Lichtstabilisatoren oder Kombinationen von phenolischen Antioxidantien und Phosphiten enthalten, vor der Verfärbung. Ferner werden Verfärbungen, die auf die Einwirkung von Zerfallsprodukten natürlicher Gase zurückzuführen sind, merklich vermindert.

Die vorliegende Erfindung betrifft Verbindungen der Formel I,

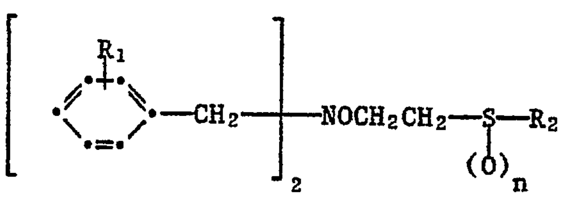

(I)

worin n 1 oder 2 bedeutet, $R_1$ Wasserstoff, $C_1$–$C_{36}$-Alkyl, $C_5$–$C_{12}$-Cylcloalkyl, Phenyl, $C_7$–$C_9$-Aralkyl oder durch $C_1$–$C_{36}$-Alkyl substituiertes $C_7$–$C_9$-Aralkyl ist und $R_2$ $C_1$–$C_{36}$-Alkyl, $C_5$–$C_{12}$-Cycloalkyl, Phenyl, $C_7$–$C_9$-Aralkyl, durch $C_1$–$C_{36}$-Alkyl substituiertes $C_7$–$C_9$-Aralkyl oder eine Gruppe der Formel

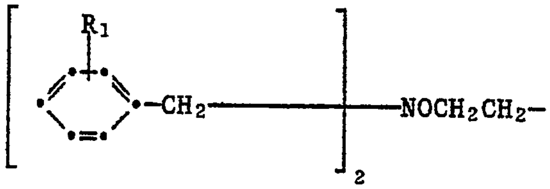

ist, worin $R_1$ die oben angegebenen Bedeutungen besitzt.

$R_1$ und $R_2$ bedeuten als $C_1$–$C_{36}$-Alkyl zum Beispiel Methyl, Ethyl, n-Propyl, n-Butyl, tert-Butyl, n-Pentyl, n-Octyl, 2-Ethylhexyl, Decyl oder Dodecyl. $C_1$–$C_{12}$-Alkyl, welches geradkettig oder verzweigt sein kann, ist bevorzugt.

$R_1$ und $R_2$ sind als $C_5$–$C_{12}$-Cycloalkyl beispielsweise Cyclopentyl, Cyclohexyl oder Cyclooctyl. Bevorzugt ist Cycloalkyl mit 5 bis 7 Kohlenstoffatomen, insbesondere Cyclopentyl und Cyclohexyl.

$R_1$ und $R_2$ können als unsubstituiertes oder durch $C_1$–$C_{36}$-Alkyl substituiertes $C_7$–$C_9$-Aralkyl insbesondere Phenylalkyl mit 7 bis 9 Kohlenstoffatomen bedeuten, wobei der Phenylring gegebenenfalls durch $C_1$–$C_{36}$-Alkyl, bevorzugt Methyl, substituiert sein kann. Beispiele sind Benzyl, α-Methylbenzyl, α,α-Dimethylbenzyl, 3,5-Dimethylbenzyl und p-Nonylbenzyl.

n bedeutet 1 und bevorzugt 2.

Von Interesse sind Verbindungen der Formel I, worin $R_1$ und $R_2$ unabhängig voneinander $C_1$–$C_{12}$-Alkyl, Cyclopentyl, Cyclohexyl, Phenyl, Benzyl, α-Methylbenzyl oder α,α-Dimethylbenzyl sind.

$R_1$ bedeutet bevorzugt Wasserstoff.

Ebenfalls bevorzugt sind Verbindungen der Formel I, worin $R_2$ eine Gruppe der Formel

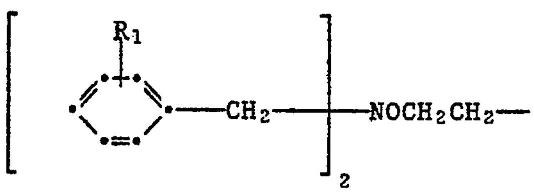

ist, worin $R_1$ Wasserstoff, $C_1$–$C_{36}$-Alkyl, $C_5$–$C_{12}$-Cycloalkyl, Phenyl, $C_7$–$C_9$-Aralkyl oder durch $C_1$–$C_{36}$-Alkyl substituiertes $C_7$–$C_9$-Aralkyl bedeutet.

Bevorzugte Beispiele für Verbindungen der Formel I sind:

[N,N-(Dibenzyl)aminoxyethyl]ethylsulfon

[N,N-(Dibenzyl)aminoxyethyl]phenylsulfoxid

Bis[N,N-(dibenzyl)aminoxyethyl]sulfon

Die Verbindungen der Formel I können in Analogie zu bekannten Verfahren hergestellt werden, beispielsweise durch Umsetzung eines entsprechenden Dibenzylhydroxylamins mit einem Vinylsulfoxid oder -sulfon in einem geeigneten Lösungsmittel.

Als Lösungsmittel seien genannt: Aromatische Kohlenwasserstoffe wie beispielsweise Benzol, Toluol, Xylol und dergleichen, oder heterocyclische Ether wie beispielsweise Tetrahydrofuran. Die Reaktionstemperatur liegt zweckmässigerweise bei 0 bis 80°C. Bevorzugt erfolgt die oben beschriebene Umsetzung in Gegenwart eines Protonenakzeptors wie beispielsweise einem tertiären Amin, insbesondere Triethylamin oder Pyridin, oder einem Alkalihydroxid oder einem Alkalialkoxid.

Die Ausgangsverbindungen sind bekannt, teilweise im Handel erhältlich und können in Analogie zu bekannten Verfahren hergestellt werden.

Die erfindungsgemässen Verbindungen eignen sich als Stabilisatoren für eine Reihe von organischen Materialien, wie beispielsweise

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxy-alkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylenisophthalamid, sowie deren Block-Copolymere mit Polyethern, wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Bevorzugt werden die Verbindungen der Formel I in synthetischen Polymeren, insbesondere Polyolefin-Homopolymeren oder -Copolymeren, eingesetzt.

Besonders bevorzugt werden die Verbindungen der Formel I in Polyolefinen, wie beispielsweise Polyethylen und Polypropylen, Polystyrol, einschliesslich schlagfestem Polystyrol, Acrylnitril-Butadien-Styrol-Harz (ABS), Styrol-Butadien-Kautschuk (SBR), Isopren als auch natürlichem Kautschuk, Polyester, einschliesslich Polyethylenterephthalat und Polybutadienterephthalat sowie deren Copolymeren, und in Schmierölen, die beispielsweise aus Mineralölen hergestellt werden, eingesetzt.

Im allgemeinen können die erfindungsgemässen Verbindungen in Konzentrationen von ~0,01 bis ~5 Gew.-%, bezogen auf die stabilisierte Zusammensetzung, eingesetzt werden; allerdings kann je nach Verwendung und Substrat die Stabilisatormenge variieren. Bevorzugt verwendet man ~0,5 bis 2 Gew.-%, insbesondere 0,1 bis 1 Gew.-%.

Die Einarbeitung der erfindungsgemässen Stabilisatoren in das organische Material kann nach bekannten Methoden während jeder Verarbeitungsstufe vor oder während der Formgebung erfolgen. Der Stabilisator kann beispielsweise der Schmelze zugegeben oder auch in Pulverform dem organischen Material zugemischt werden oder eine Emulsion bzw. Suspension des Stabilisators kann mit einer Lösung, Suspension oder Emulsion des organischen Materials vermischt werden.

Die stabilisierten Zusammensetzungen dieser Erfindung können gegebenenfalls auch herkömmliche Additive in Konzentrationen von beispielsweise ~0,05 bis ~5 Gew.-%, bevorzugt ~0,1 bis 2,5 Gew.-%, bezogen auf das stabilisierte Material, enthalten.

Beispiele für herkömmliche Additive sind:

1. Antioxidantien

1.1 Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Di-(3-tert.butyl-4-hydroxy-5-methylphenyl)-dicyclopentadien, Di-[2-(3'-tert.butyl-2'-hydroxy-5'-methyl-benzyl)-6-tert.butyl-4-methyl-phenyl]-terephthalat.

1.5. Benzylverbindungen, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-salz.

1.6. Acylaminophenole, z.B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyl-oxalsäurediamid.

1.9. Amide der β-(3,5-Di-tert.butyl-4-hydroxyphenyl)-propionsäure, wie z.B. N,N'-Di-(3,5-di-tert.butyl-4-hydroxyphenylpropionyl)-hexamethylendiamin, N,N'-Di-(3,5-di-tert.butyl-4-hydroxyphenylpropionyl)-trimethylendiamin, N,N'-Di-(3,5-di-tert.butyl-4-hydroxyphenylpropionyl)-hydrazin.

2. UV-Absorber und Lichtschutzmittel

2.1. (2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols] wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzyl-phosphonsäure-monoalkylestern, wie vom Methyl- oder Ethylester, Nickelkomplexe von Ketoximen, wie von 2-Hydroxy-4-methyl-phenylundecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6,-tetramethyl-4-piperidyl)-1,2,3,4-butantetracarbonsäure, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert. butyl-oxanilid, Gemische von o- und p-Methoxy- sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-phenoxy-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die Verbindungen der Formel I eignen sich sowohl allein als auch in Kombination mit anderen Additiven als Stabilisatoren für eine Reihe von Substraten, insbesondere Polyolefinen, die gegebenenfalls Alkalimetall-, Erdalkalimetall- und Aluminiumsalze von höheren Fettsäuren (Beispiele sind die oben unter Punkt 7 aufgeführten Additive) und/oder gehinderte phenolische Antioxidantien enthalten können. Die erfindungsgemässen Aminoxyethylsulfoxide und -sulfone vermindern sehr wirksam Verfärbungen, die auf die Anwesenheit von Phenolen zurückzuführen sind. Solche phenolischen Antioxidantien sind beispielsweise: n-Octadecyl-3,5-di-tert-butyl-4-hydroxyhydrocinnamat, Neopentantetrayl-tetrakis(3,5-di-tert-butyl-4-hydroxyhydrocinnamat), Di-n-octadecyl-3,5-di-tert-butyl-4-hydroxybenzylphosphonat, 1,3,5-Tris(3,5-di-tert-butyl-4-hydroxy-benzyl)isocyanurat, Thiodiethylen-bis(3,5-di-tert-butyl-4-hydroxyhydrocinnamat), 1,3,5-Trimethyl-2,4,6-tris(3,5-di-tert-butyl-4-hydroxybenzyl)benzol, 3,6-Dioxaoctamethylen-bis(3-methyl-5-tert-butyl-4-hydroxyhydrocinnamat), 2,6-Di-tert-butyl-p-cresol, 2,2'-Ethyliden-bis(4,6-di-tert-butylphenol), 1,3,5-Tris(2,6-di-methyl-4-tert-butyl-3-hydroxybenzyl)isocyanurat, 1,1,3-Tris(2-methyl-4-hydroxy-5-tert-butylphenyl)butan, 1,3,5-Tris[2-(3,5-di-tert-butyl-4-hydroxy-

hydro-cinnamoyloxy)ethyl]isocyanurat, 3,5-Bis(3,5-di-tert-butyl-4-hydroxybenzyl)mesitol, Hexamethylen-bis(3,5-di-tert-butyl-4-hydroxyhydrocinnamat), 1-(3,5-Di-tert-butyl-4-hydroxyanilino)-3,5-bis-(octylthio)-s-triazine, N,N'-Hexamethylen-bis(3,5-di-tert-butyl-4-hydroxyhydrocinnamamid), Kalzium-bis(ethyl-3,5-di-tert-butyl-4-hydroxybenzylphosphonat), Ethylen-bis[3,3-bis(3-tert-butyl-4-hydroxyphenyl)butyrat], Octyl-3,5-di-tert-butyl-4-hydroxybenzylmercaptoacetat, Bis(3,5-di-tert-butyl-4-hydroxyhydrocinnamoyl)hydrazid, und N,N'-Bis[2-(3,5-di-tert-butyl-4-hydroxyhydrocinnamoyloxy)-ethyl]oxamid, insbesondere Neopentantetrayl-tetrakis(3,5-di-tert-butyl-4-hydroxyhydrocinnamat), n-Octadecyl-3,5-di-tert-butyl-4-hydroxyhydrocinnamat), 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat, 2,6-di-tert-butyl-p-cresol oder 2,2'-Ethyliden-bis(4,6-di-tert-butylphenol).

Die Verbindungen der Formel I verhindern auch Verfärbungen, die auf die Anwesenheit von gehinderten Amin-Lichtstabilisatoren zurückzuführen sind, wie beispielsweise Bis(1,2,2,6,6-pentamethyl-4-piperidyl-2-n-butyl-2-(3,5-di-tert-butyl-4-hydroxybenzyl)malonat, Bis(2,2,6,6-tetramethyl-4-piperidyl)-sebacat, Umsetzungsprodukt von Dimethylsuccinat mit 1-Hydroxyethyl-2,2,6,6-tetramethyl-4-hydroxypiperidin und Umsetzungsprodukt von 2,4-Dichloro-6-octylamino-s-triazin mit N,N'-(2,2,6,6-Tetramethyl-4-piperidyl)hexamethylendiamin.

Die folgenden Beispiele erläutern die Erfindung weiter. Alle Mengenangaben beziehen sich auf das Gewicht, soweit nicht anders angegeben.

Beispiel 1: Herstellung von [N,N-(Dibenzyl)aminoxyethyl]ethylsulfon

Eine Lösung von 17,65 g Dibenzylhydroxylamin in 50 ml Tetrahydrofuran wird mit 1 g Kalium-tert-butoxid gemischt. Anschliessend werden 10 g Ethylvinylsulfon in 50 ml Tetrahydrofuran hinzugegeben. Die Lösung wird 12 Stunden bei Raumtemperatur gerührt und dann bei vermindertem Druck konzentriert. Die wässrige Phase wird abgetrennt. Die organische Phase wird mit Wasser und einer Salzlösung gewaschen, über $MgSO_4$ getrocknet und eingeengt. Nach chromatographischer Reinigung (Flüssigkeitschromatographie) erhält man das Produkt als weissen Feststoff.

Schmelzpunkt: 65–67°C

Elementaranalyse:

Berechnet für $C_{18}H_{23}NO_3S$: C 64,8; H 7,0; N 4,2
Gefunden: C 65,2; H 6,9; N 4,0

Beispiel 2: Herstellung von [N,N-(Dibenzyl)aminoxyethyl]phenylsulfoxid

Die Herstellung erfolgt in Analogie zu Beispiel 1. Es werden 21,3 g Dibenzylhydroxylamin, 1,12 g Kalium-tert-butoxid und 15,2 g Phenylvinylsulfoxid in Tetrahydrofuran eingesetzt. Man erhält das Produkt als blass gelbes Öl.

Elementaranalyse:

Berechnet für $C_{22}H_{23}NO_2S$: C 72,3; H 6,3; N 3,8
Gefunden: C 72,4; H 6,2; N 3,8

Beispiel 3: Herstellung von Bis[N,N-(dibenzyl)aminoxyethyl]sulfon

Die Herstellung erfolgt in Analogie zu Beispiel 1. Es werden 21,25 g Dibenzylhydroxylamin, 1,12 g Kalium-tert-butoxid und 5,89 g Vinylsulfon in Tetrahydrofuran eingesetzt. Man erhält das Produkt als dickes Öl.

Elementaranalyse:

Berechnet für $C_{32}H_{36}N_2O_4S$: C 70,6; H 6,7; N 5,1
Gefunden: C 70,9; H 6,3; N 5,1

Beispiel 4: Verarbeitungsstabilität von Polypropylen

Die Grundformulierung enthält 100 Teile unstabilisiertes Polypropylen (®Profax 6501, Himont) und 0,1 Teil Kalziumstearat. Die unten angegebenen Stabilisatoren werden in Form einer Lösung dem Polypropylen zugemischt (Lösungsmittel: Methylenchlorid). Das Lösungsmittel wird im Vakuum entfernt. Die stabilisierte Harzformulierung wird bei 100 Umdrehungen pro Minute extrudiert.

| Extrusionsbedingungen: | |
|---|---|
| Zylinder 1 | 232°C |
| Zylinder 2 | 246°C |
| Zylinder 3 | 260°C |
| Düse 1 | 260°C |
| Düse 2 | 260°C |
| Düse 3 | 260°C |

Nach der ersten, dritten und fünften Extrusion werden die Harz-Kügelchen unter Druck bei 193°C zu 3,2 mm dicken Folien verformt.

Der "Yellowness Index" der Proben wird gemäss ASTM D 1925-63 T bestimmt. Niedrige Werte bedeuten eine geringe Verfärbung. Die Ergebnisse sind in Tabelle Ia wiedergegeben.

Der Schmelzindex der Proben wird gemäss ASTM 1238-L bestimmt. Höhere Werte bedeuten eine geringere Molmasse und sind ein Hinweis dafür, dass das Polymer abgebaut ist. Die Ergebnisse sind in Tabelle Ib aufgeführt.

**Tabelle Ia**

| Stabilisator | «Yellowness Index» nach der | | |
|---|---|---|---|
| | 1. Extrusion | 3. Extrusion | 5. Extrusion |
| ohne | 1,8 | 2,5 | 3,5 |
| 0,1% Antioxidans A | 4,6 | 8,9 | 10,9 |
| 0,1% Antioxidans A plus 0,05% Beispiel 3 | 1,9 | 2,9 | 3,6 |

**Tabelle Ib**

| Stabilisator | «Schmelzindex» in g/10 min nach der | |
|---|---|---|
| | 1. Extrusion | 5. Extrusion |
| ohne | 5,0 | 9,9 |
| 0,1% Antioxidans A | 2,8 | 4,8 |
| 0,1% Antioxidans A plus 0,05% Beispiel 3 | 2,2 | 3,8 |

Antioxidans A:
Neopentantetrayl-tetrakis[3,5-di-tert-butyl-4-hydroxyhydrocinnamat]

**Patentansprüche**

1. Verbindungen der Formel I

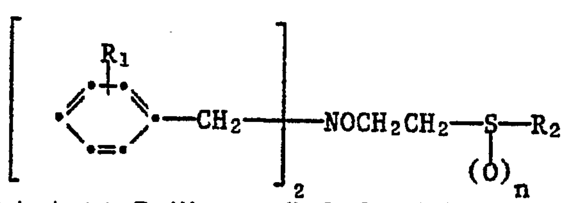

(I)

worin n 1 oder 2 bedeutet, $R_1$ Wasserstoff, $C_1$–$C_{36}$-Alkyl, $C_5$–$C_{12}$-Cycloalkyl, Phenyl, $C_7$–$C_9$-Aralkyl oder durch $C_1$–$C_{36}$-Alkyl substituiertes $C_7$–$C_9$-Aralkyl ist und $R_2$ $C_1$–$C_{36}$-Alkyl, $C_5$–$C_{12}$-Cycloalkyl, Phenyl, $C_7$–$C_9$-Aralkyl, durch $C_1$–$C_{36}$-Alkyl substituiertes $C_7$–$C_9$-Aralkyl oder eine Gruppe der Formel

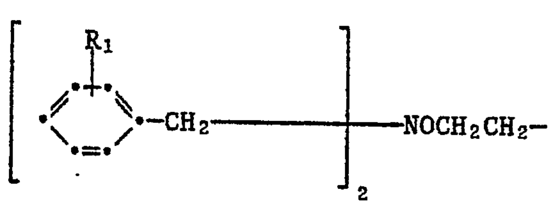

ist, worin $R_1$ die oben angegebenen Bedeutungen besitzt.

2. Verbindungen gemäss Anspruch 1, worin n 1 bedeutet.
3. Verbindungen gemäss Anspruch 1, worin n 2 ist.
4. Verbindungen gemäss Anspruch 1, worin $R_1$ und $R_2$ unabhängig voneinander $C_1$–$C_{12}$-Alkyl, Cyclopentyl, Cyclohexyl, Phenyl, Benzyl, α-Methylbenzyl oder α,α-Dimethylbenzyl sind.
5. Verbindungen gemäss Anspruch 1, worin $R_1$ Wasserstoff ist.
6. Verbindungen gemäss Anspruch 1, worin $R_2$ eine Gruppe der Formel

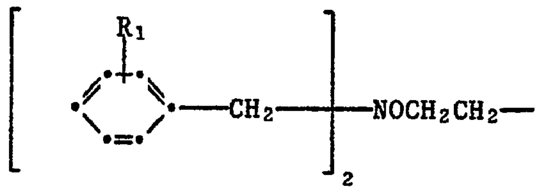

ist, worin $R_1$ die in Anspruch 1 angegebenen Bedeutungen besitzt.
7. [N,N-(Dibenzyl)aminoxyethyl]ethylsulfon gemäss Anspruch 1.
8. [N,N-(Dibenzyl)aminoxyethyl]phenylsulfoxid gemäss Anspruch 1.
9. Bis[N,N-(dibenzyl)aminoxyethyl]sulfon gemäss Anspruch 1.
10. Zusammensetzung enthaltend ein gegen oxidativen, thermischen und/oder aktinischen Abbau empfindliches organisches Material und eine für die Stabilisierung ausreichende Menge einer Verbindung gemäss Anspruch 1.
11. Zusammensetzung gemäss Anspruch 10, worin das organische Material ein synthetisches Polymer ist.
12. Zusammensetzung gemäss Anspruch 11, worin das synthetische Polymer ein Polyolefin-Homopolymer oder -Copolymer ist.
13. Zusammensetzung gemäss Anspruch 10, dadurch gekennzeichnet, dass die Zusammensetzung mindestens ein herkömmliches Additiv enthält.
14. Zusammensetzung gemäss Anspruch 13, worin das herkömmliche Additiv ein Metallsalz einer höheren Fettsäure ist.
15. Zusammensetzung gemäss Anspruch 13, worin das herkömmliche Additiv ein phenolisches Antioxidans ist.
16. Zusammensetzung gemäss Anspruch 13, worin die herkömmlichen Additive ein Metallsalz einer höheren Fettsäure und ein phenolisches Antioxidans sind.
17. Zusammensetzung gemäss Anspruch 15, worin das phenolische Antioxidans Neopentantetrayl-tetrakis(3,5-di-tert-butyl-4-hydroxyhydrocinnamat), n-Octadecyl-3,5-di-tert-butyl-4-hydroxyhydrocinnamat, 1,3,5-Trimethyl-2,4,6-tris(3,5-di-tert-butyl-4-hydroxybenzyl)benzol, 1,3,5-tris(3,5-di-tert-butyl-4-hydroxybenzyl)isocyanurat, 2,6-Di-tert-butyl-p-cresol oder 2,2′-Ethyliden-bis(4,6-di-tert-butylphenol) ist.
18. Verwendung von Verbindungen gemäss Anspruch 1 zum Stabilisieren von organischem Material gegen oxidativen, thermischen und/oder aktinischen Abbau.

**Claims**

1. A compound of the formula

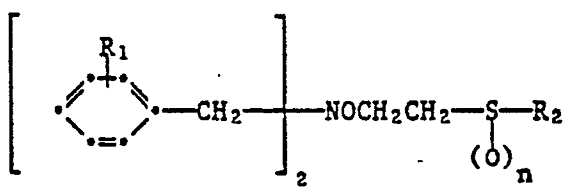

(I)

wherein n is 1 or 2,
$R_1$ is hydrogen, $C_1$–$C_{36}$ alkyl, $C_5$–$C_{12}$ cycloalkyl, phenyl, $C_7$–$C_9$ aralkyl or $C_7$–$C_9$ aralkyl substituted by $C_1$–$C_{36}$ alkyl, and $R_2$ is $C_1$–$C_{36}$ alkyl, $C_5$–$C_{12}$ cycloalkyl, phenyl, $C_7$–$C_9$ aralkyl, $C_7$–$C_9$ aralkyl substituted by $C_1$–$C_{36}$ alkyl or a group of the formula

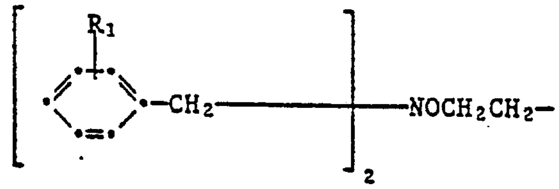

wherein $R_1$ is as defined above.

2. The compound according to claim 1, wherein n is 1.

3. The compound according to claim 1, wherein n is 2.

4. The compound according to claim 1, wherein $R_1$ and $R_2$ are independently of one another $C_1$–$C_{12}$ alkyl, cyclopentyl, cyclohexyl, phenyl, benzyl, α-methylbenzyl or α,α-dimethylbenzyl.

5. The compound according to claim 1, wherein $R_1$ is hydrogen.

6. The compound according to claim 1, wherein $R_2$ is a group of the formula

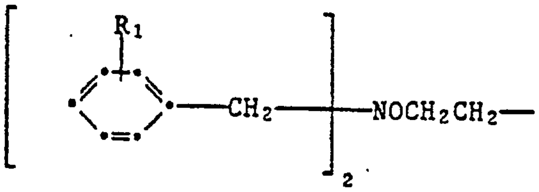

wherein $R_1$ is as defined in claim 1.

7. [N,N-(Dibenzyl)aminoxyethyl]ethyl sulfone according to claim 1.

8. [N,N-(Dibenzyl)aminoxyethyl]phenylsulfoxide according to claim 1.

9. Bis[N,N-(Dibenzyl)aminoxyethyl]sulfone according to claim 1.

10. A composition containing an organic material subject to oxidative, thermal and/or actinic degradation and an effective stabilizing amount of a compound according to claim 1.

11. The composition according to claim 10, wherein the organic material is a synthetic polymer.

12. The composition according to claim 11, wherein the synthetic polymer is a polyolefin homopolymer or copolymer.

13. The composition according to claim 10, which contains at least one conventional additive.

14. The composition according to claim 13, wherein the conventional additive is a metal salt of a higher fatty acid.

15. The composition according to claim 13, wherein the conventional additive is a phenolic antioxidant.

16. The composition according to claim 13, wherein the conventional additives are a metal salt of a higher fatty acid and a phenolic antioxidant.

17. The composition according to claim 15, wherein the phenolic antioxidant is neopentanetetrayl tetrakis(3,5-di-tert-butyl-4-hydroxyhydrocinnamate), n-octadecyl-3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol and 2,2'-ethylidene-bis(4,6-di-tert-butylphenol).

18. The use of a compound according to claim 1 for stabilizing an organic material against oxidative, thermal and/or actinic degradation.

**Revendications**

1. Composés répondant à la formule I:

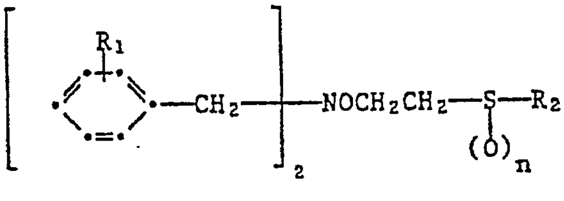

(I)

dans laquelle n désigne un nombre égal à 1 ou à 2, $R_1$ représente l'hydrogène, un alkyle en $C_1$–$C_{36}$, un cycloalkyle en $C_5$–$C_{12}$, un phényle, un aralkyle en $C_7$–$C_9$ ou un aralkyle en $C_7$–$C_9$ porteur d'un alkyle en $C_1$–$C_{36}$, et $R_2$ représente un alkyle en $C_1$–$C_{36}$, un cycloalkyle en $C_5$–$C_{12}$, un phényle, un aralkyle en $C_7$–$C_9$, un aralkyle en $C_7$–$C_9$ porteur d'un alkyle en $C_1$–$C_{36}$, ou un radical répondant à la formule:

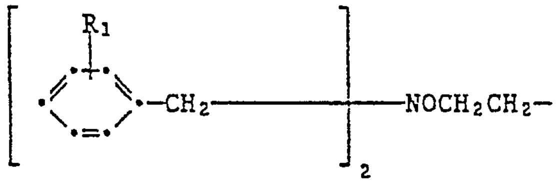

dans laquelle $R_1$ a la signification qui lui a été donnée ci-dessus.

2. Composés selon la revendication 1 dans lesquels n est égal à 1.

3. Composés selon la revendication 1 dans lesquels n est égal à 2.

4. Composés selon la revendication 1 dans lesquels $R_1$ et $R_2$ représentent chacun, indépendamment l'un de l'autre, un alkyle en $C_1$–$C_{12}$, un cyclopentyle, un cyclohexyle, un phényle, un benzyle, un α-méthyl-benzyle ou un α,α-diméthyl-benzyle.

5. Composés selon la revendication 1 dans lesquels $R_1$ représente l'hydrogène.

6. Composés selon la revendication 1 dans lesquels $R_2$ représente un radical répondant à la formule:

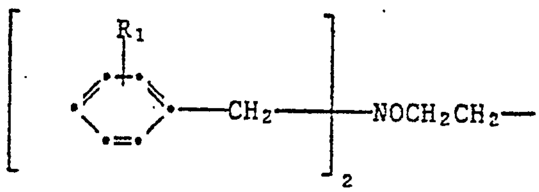

dans laquelle $R_1$ a la signification qui lui a été donnée à la revendication 1.

7. Composé selon la revendication 1, en l'espèce la [N,N-(dibenzyl)-amino-oxy-éthyl]éthyl sulfone.

8. Composé selon la revendication 1, en l'espèce le [N,N-(dibenzyl)-amino-oxy-éthyl]phényl sulfoxyde.

9. Composé selon la revendication 1, en l'espèce la bis-[N,N-(dibenzyl)-amino-oxy-éthyl]sulfone.

10. Composition qui contient une matière organique sensible à la dégradation par l'oxydation, la chaleur et/ou les rayonnements actiniques, et une quantité, suffisante pour la stabilisation, d'un composé selon la revendication 1.

11. Composition selon la revendication 10 dans laquelle la matière organique est un polymère synthétique.

12. Composition selon la revendication 11 dans laquelle le polymère synthétique est un homopolymère ou un copolymère d'oléfines.

13. Composition selon la revendication 10 caractérisée en ce qu'elle contient au moins un additif usuel.

14. Composition selon la revendication 13 dans laquelle l'additif usuel est un sel métallique d'un acide gras supérieur.

15. Composition selon la revendication 13 dans laquelle l'additif usuel est un anti-oxydant phénolique.

16. Composition selon la revendication 13 dans laquelle les additifs usuels sont un sel métallique d'un acide gras supérieur et un anti-oxydant phénolique.

17. Composition selon la revendication 15 dans laquelle l'anti-oxydant phénolique est le tétrakis-(di-tert-butyl-3,5 hydroxy-4 hydrocinnamate) de néopentanetétrayle, le di-tert-butyl-3,5 hydroxy-4 hydrocinnamate de n-octadécyle, le triméthyl-1,3,5 tris-(di-tert-butyl-3,5 hydroxy-4 benzyl)-2,4,6 benzène, l'isocyanurate de tris-(di-tert-butyl-3,5 hydroxy-4 benzyle), le di-tert-butyl-2,6 p-crésol ou l'éthylidène-2,2' bis-(di-tert-butyl-4,6 phénol).

18. Application de composés selon la revendication 1 à la stabilisation de matières organiques contre la dégradation due à l'oxydation, à la chaleur et/ou aux rayonnements actiniques.